# DEMANDE DE BREVET EUROPEEN

(11) **EP 2 043 017 A1**
(43) Date de publication de la demande: **01.04.2009**
(21) Numéro de dépôt: 07300944.1
(22) Date de dépôt: 12.04.2007
(51) Int. Cl.: G06F 21/00

(54) **Procédé d'exécution sécurisée d'une application**

(71) Demandeur: GEMPLUS, 13420 Gémenos (FR)
(72) Inventeur: Gauteron, Laurent, 13700 Marignane (FR)

(57) **Abrégé**

L'invention concerne un procédé d'exécution sécurisée d'une application sur un appareil électronique portatif muni d'un microprocesseur et d'une mémoire non volatile. L'application comporte une suite d'instructions. L'exécution de l'application utilise au moins une variable temporaire et/ou au moins une pile. Le procédé comprend une étape de génération d'au moins une donnée de contrôle représentative de la variable temporaire et/ou de l'état de la pile, au moment de l'exécution d'une instruction, une étape de recherche d'une donnée de contrôle liée à ladite instruction, lors de l'exécution de ladite instruction et lorsqu'une donnée de contrôle a été trouvée, une étape d'exécution d'une opération de vérification du contenu de la variable temporaire ou de l'état de la pile fondée sur la donnée de contrôle trouvée.

## Description

### (Domaine technique)

La présente invention se rapporte aux procédés d'exécution sécurisée d'application. Plus précisément, l'invention concerne un procédé pour sécuriser l'exécution d'une application face aux attaques par fautes, lors de son exécution sur un appareil électronique portatif.

### (Art antérieur)

Un appareil électronique portatif désignera par la suite tout appareil électronique portatif doté d'un microcontrôleur réunissant un microprocesseur et des mémoires, tel qu'une carte à puce par exemple.

Le microprocesseur de l'appareil électronique portatif dispose d'un jeu d'instructions qui lui est propre. Ce jeu d'instructions comporte par exemple un certain nombre d'instructions classiques comme les opérations arithmétiques, logiques et les sauts. Le microprocesseur dispose typiquement d'une pile d'exécution et peut utiliser des variables locales. En particulier, lorsque le microprocesseur exécute les instructions d'une application, il peut stocker temporairement des informations dans la pile d'exécution ou des variables locales. Par exemple un indice de boucle ou des données destinées à un calcul peuvent être stockées dans une variable locale.

A l'heure actuelle, l'exécution d'une application par le microprocesseur n'est pas entièrement sécurisée, notamment vis-à-vis des attaques en général et, en particulier, des attaques par faute. Ainsi, la valeur d'une donnée sensible ou non, qui est stockée en mémoire pour être utilisée par le microprocesseur, peut être modifiée suite à l'injection d'une faute. Il s'en suit que l'exploitation ultérieure de cette donnée pour l'exécution d'une application par le microprocesseur peut conduire à un résultat différent de celui normalement attendu.

Une façon connue de protéger les applications contre les attaques par faute lors de leur exécution par le microprocesseur sur la carte, consiste à ajouter un code redondant de contrôle au sein même du code de l'application devant être exécutée.

Notamment, il est connu d'ajouter des contrôles spécifiques dans les systèmes d'exploitations des systèmes de gestion de données. Ces contrôles spécifiques ont pour finalité d'empêcher la modification des instructions qui doivent être exécutées. Ces contrôles spécifiques sont généralement des vérifications basées sur le principe de redondance.

Un problème est que les développeurs d'applications doivent développer le code de leur application en tenant compte de cette contrainte pour eux afin de protéger les parties sensibles du code. C'est à l'application elle-même de prévoir les vérifications.

### (Résumé de l'invention)

L'invention vise à résoudre un ou plusieurs de ces inconvénients. Contrairement à un procédé d'exécution sécurisée classique, l'invention peut détecter une anomalie lors de l'exécution même si les instructions de l'application n'ont pas été modifiées. L'invention permet de vérifier que le contexte d'exécution de l'application n'a pas été altéré. En outre cette vérification peut s'effectuer sans faire appel à des fonctions cryptographiques qui sont généralement gourmandes en ressources et en temps. La vérification peut dont être réalisée à moindre coût en utilisant des fonctions simples et rapides ce qui est particulièrement important dans un système à ressources limitées tel qu'un appareil électronique portatif.

L'invention est un procédé d'exécution sécurisée d'une application sur un appareil électronique portatif muni d'un microprocesseur et d'une mémoire non volatile. L'application comporte une suite d'instructions et l'exécution de l'application utilise au moins une variable et/ou au moins une pile.

Le procédé comprend les étapes suivantes :
a) une étape de génération d'au moins une donnée de contrôle représentative de la variable et/ou de l'état de la pile, au moment de l'exécution d'une instruction,
b) lors de l'exécution de ladite instruction, une étape de recherche d'une donnée de contrôle liée à ladite instruction,
c) lorsqu'une donnée de contrôle a été trouvée, une étape d'exécution d'une opération de vérification du contenu de la variable ou de l'état de la pile fondée sur la donnée de contrôle trouvée.

L'exécution de l'application peut utiliser au moins une variable de type temporaire.

Avantageusement, l'application peut être écrite en code intermédiaire et l'appareil électronique portatif peut comprendre en outre une machine virtuelle d'exécution pour l'interprétation de ladite application. L'étape a) peut être effectuée préalablement à l'exécution de ladite application par la machine virtuelle.

De préférence, l'étape c) peut être réalisée par la machine virtuelle. La machine virtuelle peut être du type Java^{®} ou DotNet^{®}.

Avantageusement, lors de l'étape a), chaque donnée de contrôle peut être générée en tenant compte du fait que l'opération de vérification de l'étape c) est activée au moment où l'instruction liée à la donnée de contrôle est l'instruction en cours d'exécution.

Préférentiellement, chaque donnée de contrôle, liée à une variable, peut comporter une valeur unique ou une plage de valeurs consécutives ou une liste de valeurs discrètes.

De préférence, l'opération de vérification de l'étape c) peut consister à comparer le contenu de la variable, correspondant à la donnée de contrôle trouvée lors de l'étape b), avec la/les valeurs définies dans ladite donnée de contrôle.

Alternativement, chaque donnée de contrôle, liée à l'état d'une pile, peut comporter au moins une valeur indiquant la taille de ladite pile.

Avantageusement, l'opération de vérification de l'étape c) peut consister à comparer la taille de ladite pile avec la/les valeurs définies dans la donnée de contrôle trouvée lors de l'étape b).

En variante, lors de l'étape a), est générée une pluralité de données de contrôle liées à une unique instruction.

Préférentiellement, un paramètre de niveau de vérification peut être préalablement fourni à l'appareil. Un niveau de contrôle peut être associé à chaque donnée de contrôle, lors de l'étape c), le résultat d'une comparaison entre le niveau de contrôle associé à une donnée de contrôle et le paramètre de niveau de vérification peut déterminer si l'opération de vérification doit être effectuée.

De préférence l'étape a) peut être réalisée par des moyens distincts de l'appareil électronique portatif, les données de contrôle générées étant ensuite chargées dans l'appareil électronique portatif.

De façon alternative, l'étape a) peut être réalisée par des moyens embarqués dans l'appareil électronique portatif.

Avantageusement, le procédé peut comprendre une étape supplémentaire consistant à activer une action appropriée à une détection d'erreur d'exécution ou d'attaque, en cas d'échec de la vérification de l'étape c) .

Préférentiellement, au moins une donnée de contrôle peut comprendre :
- un chemin d'exécution menant à l'instruction qui est liée à ladite donnée de contrôle, ou
- une valeur calculée en fonction d'un chemin d'exécution menant à l'instruction qui est liée à ladite donnée de contrôle.

De façon avantageuse, une liste LC d'instructions critiques peut être générée et l'opération de vérification de l'étape c) peut être considérée comme ayant échouée si aucune donnée de contrôle n'a été trouvée pour l'instruction courante et si l'instruction courante appartient à ladite liste LC.

L'invention est aussi un appareil électronique portatif comprenant un microprocesseur, une mémoire non volatile et une application comportant une suite d'instructions. Au moins une variable et/ou au moins une pile sont utilisées lors de l'exécution de l'application. L'appareil électronique portatif comprend :
- des moyens pour rechercher, lors de l'exécution de l'instruction, la donnée de contrôle liée à ladite instruction,
- des moyens pour exécuter une opération de vérification du contenu de la variable ou de l'état de la pile fondée sur la donnée de contrôle trouvée.

Préférentiellement, l'appareil peut comprendre au moins une variable de type temporaire.

Avantageusement, l'appareil peut comprendre en outre des moyens pour générer au moins une donnée de contrôle représentative de la variable et/ou de l'état d'une pile, au moment de l'exécution d'une instruction.

De préférence, l'appareil peut être une carte à puce, une clé USB ou un téléphone mobile.

Selon l'invention, une donnée de contrôle est rattachée à une instruction qui détermine le moment où la vérification exploitant la donnée de contrôle sera effectuée.

D'autres particularités et avantages de l'invention apparaîtront clairement à la lecture de la description faite à titre d'exemple non limitatif et en regard des figures suivantes dans lesquelles :
- la figure 1 illustre un système carte à puce comportant une mémoire de données, un microprocesseur, une machine virtuelle et une application écrite en langage intermédiaire de type java;
- la figure 2 illustre un exemple d'une séquence d'étapes de mise en oeuvre du procédé selon l'invention;
- la figure 3 illustre un premier exemple de données de contrôle utilisées par l'invention;
- la figure 4 illustre un deuxième exemple de données de contrôle utilisées par l'invention.

### (Description d'un exemple détaillé de l'invention)

L'invention peut s'appliquer à tout type d'appareil électronique portatif. Notamment elle peut s'appliquer pour des appareils numériques sécurisés portatifs réunissant un processeur et une ou plusieurs mémoires, tel qu'un ordinateur portatif, un baladeur, un téléphone portable, une clé USB sécurisée, mais aussi une carte à puce.

L'invention peut également s'appliquer aux d'appareils électroniques portatifs muni d'une machine virtuelle d'exécution. Une telle machine virtuelle peut être du type Java ou bien .Net ou DotNet (marque déposée).

Les applications destinées à être exécutées par une machine virtuelle sont écrites sous la forme d'un code intermédiaire qui est indépendant de l'architecture sous-jacente et en particulier du type de microprocesseur.

Ce type d'application permet de dégager les programmeurs des contraintes liées à des matériels spécifiques. De telles applications sont exploitées en langages intermédiaires tel que le pseudo-code Java (désigné par bytecode en langue anglaise), obtenu après compilation du langage source Java. Il existe également le langage intermédiaire MSIL (acronyme anglo-saxon pour « Microsoft intermediate langage ») déployé dans le cadre de l'environnement .Net ou DotNet (marque déposée), obtenu après compilation de divers langages sources possibles tels que C++ ou C#.

Le code intermédiaire correspond donc classiquement à une forme compilée du logiciel. Ces logiciels, compilés en Java, ou dans d'autres langages intermédiaires, tels que .Net ^{®}, ne peuvent pas être exécutés tel quels par le processeur de l'appareil sur lequel on désire exécuter un programme compilé sous forme de code intermédiaire. Il est nécessaire d'introduire une couche logicielle ayant pour principale fonction d'interpréter le code intermédiaire en instructions exécutables par le processeur de l'appareil électronique portatif. Cette couche logicielle est appelée « machine virtuelle ». Par exemple, la machine virtuelle JAVA permet l'exécution d'un logiciel Java sur une plate-forme donnée sur laquelle elle est implémentée.

Dans le cas d'une application Java, l'exécution est réalisée par la machine virtuelle Java au moyen du microprocesseur installé sur l'appareil portatif.

Une machine virtuelle dispose d'un jeu d'instructions propre, chaque instruction étant codée sur un ou plusieurs octets. Le jeu d'instructions de la machine virtuelle comporte par exemple un certain nombre d'instructions classiques comme les opérations arithmétiques, logiques et les sauts. La machine virtuelle dispose d'une pile d'exécution et peut utiliser des variables locales.

L'invention apporte un contrôle sur l'exécution d'une application écrite en langage natif ou en langage intermédiaire.

Un autre avantage de l'invention est de permettre de faire varier le nombre de vérifications qui sont effectuées pour contrôler l'exécution de l'application. Ceci permet, par exemple, de mettre en place des vérifications proportionnées aux risques encourus par une application particulière. Cet avantage peut être obtenu en faisant varier le nombre de données de contrôle qui sont générées pour une application choisie.

D'autre part, il est possible d'associer à chaque donnée de contrôle une information supplémentaire correspondant à un niveau de contrôle. En fournissant par ailleurs à l'appareil électronique portatif une information sur le niveau de contrôle à opérer lors de l'exécution d'application, il est possible de paramétrer l'appareil électronique portatif, pour adapter le degré de contrôle en fonction des exigences de sécurité et/ou des contraintes de temps d'exécution requises.

L'information qui est fournie à l'appareil électronique portatif sur le niveau de contrôle à opérer peut concerner une application particulière, un groupe d'applications ou bien toutes les applications.

Indépendamment de la notion de niveau de contrôle, l'appareil portatif peut être paramétré pour exploiter une partie seulement des données de contrôle disponibles pour une application.

De plus, l'invention permet de soulager la charge de développement des applications. En effet, les données de contrôle ont pour propriété d'être directement déductibles du code de l'application à protéger. Les données de contrôle peuvent donc être générées automatiquement à partir du seul code de l'application et la vérification est effectuée automatiquement par le microprocesseur ou la machine virtuelle lors de l'exécution. Avec l'invention, le niveau applicatif n'a donc pas à prendre en charge les contrôles de l'exécution de l'application.

En outre, l'invention permet de ne pas modifier le code original de l'application entre la version fournie par un développeur et la version chargée dans l'appareil électronique portatif et qui est réellement exécutée. Lorsque le code original de l'application est authentifié par une signature, l'invention a pour avantage de permettre la vérification de la signature dans l'appareil portatif car le code original de l'application reste inchangé. L'invention permet de ne pas instrumenter le code original de l'application.

Contrairement aux procédés qui effectuent la vérification de l'intégrité de l'application uniquement au moment de l'installation de l'application dans l'appareil portatif, l'invention permet d'effectuer des vérifications lors de chaque exécution de l'application. Cela permet de détecter dynamiquement une anomalie de fonctionnement.

Enfin l'invention permet le développement d'une unique application destinée à être exécutée sur des appareils de types différents. Dans pareil cas, seul les appareils portatifs munis de moyens d'exploitation des données de contrôle pourront effectuer la sécurisation de l'exécution de l'application conformément à l'invention. Les appareils portatifs qui ne sont pas munis de moyens d'exploitation des données de contrôle pourront tout de même exécuter l'application, cependant sans bénéficier de la sécurisation d'exécution apportée par la présente invention.

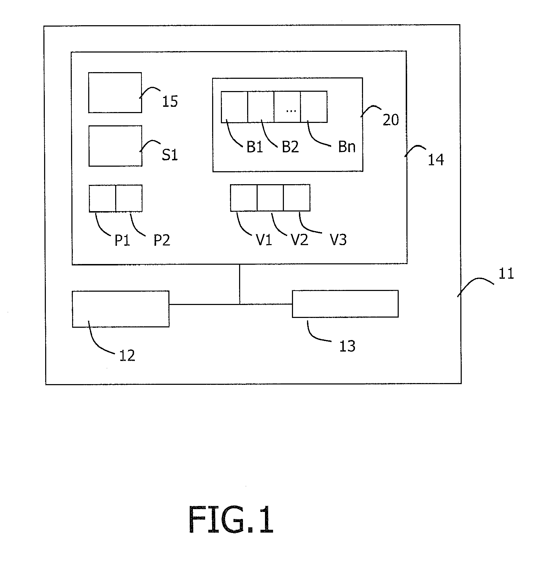

Selon un mode de réalisation préféré, l'appareil électronique portatif est une carte à puce 11 telle que représentée à la figure 1. La carte à puce contient un microprocesseur 12, une interface de communication 13 et une mémoire 14. La mémoire 14 comporte une machine virtuelle 15 de type Java, une pile S1, des données de contrôle P1, P2, des variables temporaires V1, V2, V3 et une application 20. L'application 20 est écrite en langage intermédiaire et comporte une pluralité d'instructions B1, B2, Bn. La machine virtuelle 15 réalise l'ensemble de ses actions en s'appuyant sur les moyens du microprocesseur 12.

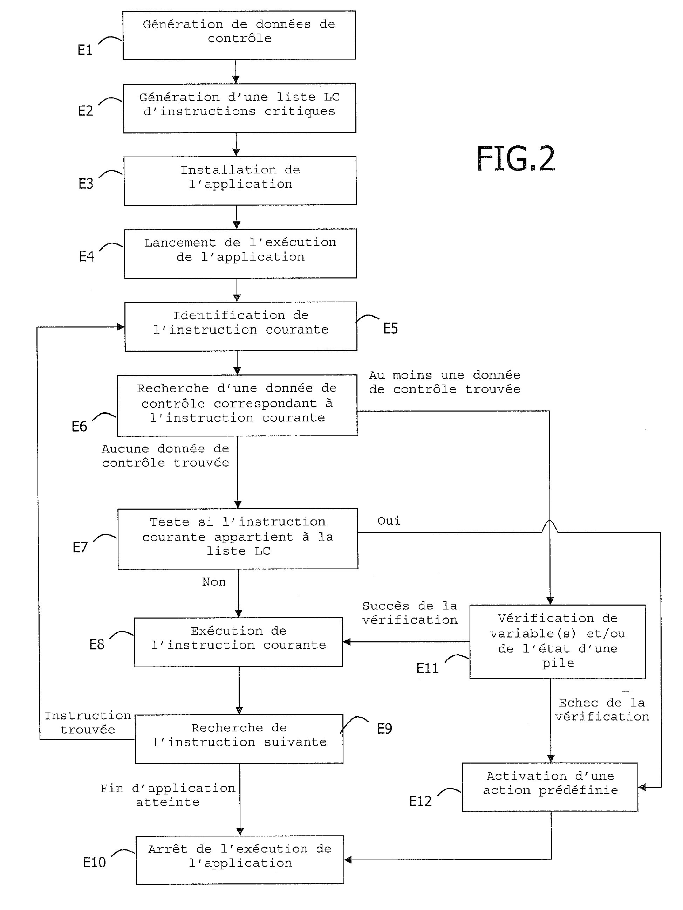

Dans un premier temps, une application est développée en langage java, puis elle est transformée en code intermédiaire apte à être exécuté par la machine virtuelle de la carte à puce 11. L'application est alors sous la forme d'un ensemble de pseudo-code Java (B1, B2, ..., Bn). Un composant dédié, tel qu'un processeur placé à l'extérieur de la carte, génère un ensemble de données de contrôle à partir du code intermédiaire lors d'une étape E1, telle que représentée à la figure 2. Ces données de contrôle correspondent à des propriétés qui devront être respectées par l'environnement d'exécution lors de l'exécution de l'application dans la carte. L'ensemble des données de contrôle peut également être généré par un ordinateur directement à partir du code source de l'application.

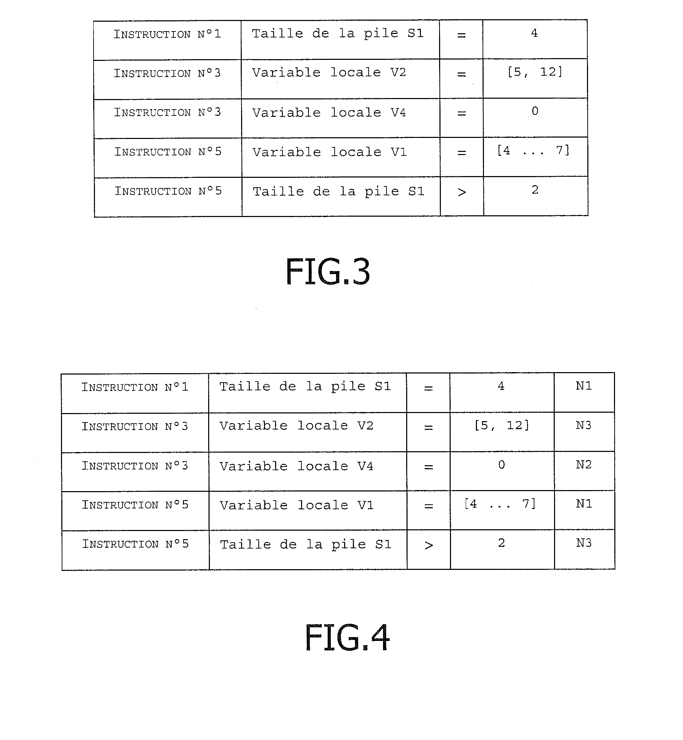

Dans l'exemple de la figure 3, chaque donnée de contrôle est définie par une référence à une instruction, une référence à une variable locale ou à la pile, un opérateur de comparaison et un ensemble de valeurs.

Dans cet exemple, une donnée de contrôle est définie pour la première instruction. Il s'agit de vérifier que la taille de la pile S1 sera égale à 4 lorsque la vérification sera effectuée.

Deux données de contrôle sont définies pour la troisième instruction. Le premier contrôle à effectuer consiste à vérifier que la valeur de la variable locale V2 sera égale à 5 ou 12. Le second contrôle à effectuer consiste à vérifier que la valeur de la variable locale V4 sera égale à zéro.

Deux données de contrôle sont définies pour la cinquième instruction. Le premier contrôle à effectuer consiste à vérifier que la valeur de la variable locale V1 sera comprise dans l'intervalle 4 à 7. Le second contrôle à effectuer consiste à vérifier que la taille de la pile S1 sera strictement supérieure à deux.

Lors d'une deuxième étape E2, une liste LC d'instructions critiques peut être générée. Celle liste peut s'appliquer à une ou plusieurs applications. La liste LC peut être générée à l'extérieur de la carte ou directement à bord de la carte.

L'application est ensuite chargée et installée dans la carte 11 lors d'une étape E3.

Lors d'une étape E4, l'exécution de l'application est lancée par la machine virtuelle 15.

Puis, lors d'une étape E5, la machine virtuelle identifie la première instruction B1 à exécuter. Cette instruction devient l'instruction courante. Avant d'exécuter l'instruction courante, une recherche E6 de données de contrôle correspondant à cette instruction est effectuée. Dans le cas où une donnée de contrôle est trouvée, une étape E11 de vérification est réalisée dans la carte 11. Cette vérification peut correspondre par exemple à vérifier que la pile S1 utilisée par la machine virtuelle 15 a une taille égale à quatre. Dans le cas d'une vérification portant sur une variable temporaire, la vérification peut se faire par comparaison de la valeur du contenu de la variable locale avec l'ensemble de valeurs définies par la donnée de contrôle correspondante.

Si la vérification échoue, une action prédéfinie est activée lors de l'étape E12 afin de prendre des mesures correspondant à la détection d'une anomalie. Par exemple, l'appareil ou la machine virtuelle peut effacer toutes les données de l'application. Puis l'exécution de l'application est arrêtée lors de l'étape E10.

Alternativement, l'appareil ou la machine virtuelle peut tenter de corriger l'erreur détectée en reconstituant la donnée erronée.

En cas de succès de la vérification effectuée lors de l'étape E11, la machine virtuelle exécute l'instruction courante au cours de l'étape E8.

Dans le cas où aucune donnée de contrôle correspondant à l'instruction courante n'a été trouvée lors de la recherche E6, un test E7 supplémentaire peut être effectué pour déterminer si l'instruction courante appartient à la liste LC des instructions critiques. Dans le cas où l'instruction courante appartient à la liste LC, une action prédéfinie est activée lors de l'étape E12 afin de prendre des mesures correspondant à la détection d'une anomalie.

Dans le cas où l'instruction courante n'appartient pas à la liste LC, l'instruction courante est exécutée par la machine virtuelle lors de l'étape E8.

Après l'exécution de l'instruction courante, la machine virtuelle recherche l'instruction suivante B2 , ..., Bn lors de l'étape E9.

Si une nouvelle instruction est trouvée, le procédé se poursuit en bouclant à l'étape E5.

En revanche, si la fin de l'application a été atteinte, alors l'exécution est arrêtée lors de l'étape E8.

Si plusieurs données de contrôle correspondent à une unique instruction, l'étape de vérification E11 consiste à effectuer tous les contrôles correspondant à l'ensemble de toutes les données de contrôles trouvées. L'étape de vérification E11 est considérée comme réalisée avec succès uniquement si tous les contrôles sont réalisés avec succès.

De façon alternative, la génération E1 des données de contrôle peut être réalisée à bord de la carte par un composant dédié embarqué. Dans ce cas, le chargement de l'application dans la carte est effectué avant la génération des données de contrôle.

Dans le cas d'une application écrite en langage natif, l'exemple du procédé décrit précédemment s'applique de la même façon à la différence que c'est le microprocesseur 12 qui agit à la place de la machine virtuelle 15.

Lors de l'étape E1 de génération, il est également possible d'associer un niveau de contrôle à chaque donnée de contrôle. Ce niveau de contrôle est une information supplémentaire qui peut être stockée dans la donnée de contrôle elle-même.

Le niveau de contrôle peut être utilisée, lors de l'étape de recherche E6 ou lors de l'étape de vérification E11, pour déterminer si la donnée de contrôle doit être vérifiée. Un paramètre définissant le niveau de vérification à atteindre lors de l'exécution d'une application est préalablement fourni à la carte 11. Lors de l'exécution de l'application, le processeur 12 ou la machine virtuelle 15 exploite ce paramètre de niveau de vérification pour identifier les données de contrôle qui doivent être vérifiées. Par exemple trois niveaux N1, N2, N3 peuvent être définis. Le niveau N1 exige une vérification allégée, le niveau N3 exige une vérification forte, et le niveau N2 exige une vérification intermédiaire.

L'étape E2 est facultative. Dans le cas où il n'y a pas d'étape E2, aucune liste LC des instructions critiques n'est générée et l'étape de test E7 n'est pas exécutée. Lorsque aucune donnée de contrôle n'a été trouvée lors de l'étape de recherche E6, l'étape E6 est alors directement suivi par l'étape E8 d'exécution de l'instruction.

Dans l'exemple de la figure 4, chaque donnée de contrôle est définie par une référence à une instruction, une référence à une variable locale ou à la pile, un opérateur de comparaison, un ensemble de valeurs et un niveau de contrôle.

Dans cet exemple, une donnée de contrôle est définie pour la première instruction avec un niveau de contrôle N1. Deux données de contrôle sont définies pour la troisième instruction avec respectivement un niveau de contrôle N3 et N2. Deux données de contrôle sont définies pour la cinquième instruction avec respectivement un niveau de contrôle N1 et N3.

Si le paramètre de niveau de vérification est fixé à N2, toutes les données de contrôle dont le niveau est N1 ou N2 devront être vérifiées à l'étape de E11. Dans le cas de la figure 4, la vérification portant sur la taille de la pile S1 sera effectuée pour l'instruction n°1. La vérification portant sur le contenu de la variable locale V4 sera effectuée pour l'instruction n°3. La vérification portant sur le contenu de la variable locale V1 sera effectuée pour l'instruction n°5. Il n'y aura pas de vérification effectuée pour les autres données de contrôle.

Dans un autre exemple basé sur les données de contrôles définies à la figure 4, si le paramètre de niveau de vérification est fixé à N1, seules les données de contrôle dont le niveau est N1 devront être vérifiées à l'étape de E11. La vérification portant sur la taille de la pile S1 sera effectuée pour l'instruction n°1. La vérification portant sur le contenu de la variable locale V1 sera effectuée pour l'instruction n°5.

Le paramètre de niveau de vérification qui est fournie à la carte peut concerner une application particulière, un groupe d'applications ou bien toutes les applications présentes sur la carte.

Des données de contrôle P1, P2 peuvent également contenir un chemin d'exécution menant à l'instruction courante, c'est à dire l'instruction en cours d'exécution. Par exemple, une donnée de contrôle peut contenir la liste des compteurs de programme ou d'instructions qui ont permis d'arriver à l'instruction courante. Dans ce cas, les données de contrôle pourront contenir une telle liste ou bien une valeur calculée en fonction d'une telle liste.

## Revendications

1. Procédé d'exécution sécurisée d'une application (20) sur un appareil électronique portatif (11) muni d'un microprocesseur (12) et d'une mémoire non volatile (14), ladite application (20) comportant une suite d'instructions (B1, B2, Bn), l'exécution de ladite application (20) utilisant au moins une variable (V1, V2, V3) et/ou au moins une pile (S1), **caractérisé en ce qu'**il comprend les étapes suivantes :
a) une étape (E1) de génération d'au moins une donnée de contrôle (P1, P2) représentative de la variable (V1, V2, V3) et/ou de l'état de la pile (S1), au moment de l'exécution d'une instruction (B1, B2, Bn),
b) lors de l'exécution de ladite instruction (B1, B2, Bn), une étape (E6) de recherche d'une donnée de contrôle (P1, P2) liée à ladite instruction (B1, B2, Bn),
c) lorsqu'une donnée de contrôle (P1, P2) a été trouvée, une étape (E11) d'exécution d'une opération de vérification du contenu de la variable (V1, V2, V3) ou de l'état de la pile (S1) fondée sur la donnée de contrôle (P1, P2) trouvée.

2. Procédé selon la revendication 1, dans lequel l'exécution de ladite application (20) utilise au moins une variable (V1, V2, V3), **caractérisé en ce que** ladite variable est temporaire.

3. Procédé selon la revendication 1 ou 2, dans lequel l'application (20) est écrite en code intermédiaire, dans lequel l'appareil électronique portatif (11) comprend en outre une machine virtuelle (15) d'exécution pour l'interprétation de ladite application (20), et dans lequel l'étape a) est effectuée préalablement à l'exécution de ladite application (20) par la machine virtuelle (15).

4. Procédé selon la revendication 3, dans lequel l'étape c) est réalisée par la machine virtuelle (15).

5. Procédé selon la revendication 3 ou 4, **caractérisé en ce que** la machine virtuelle (15) est du type Java^{®} ou DotNet^{®}.

6. Procédé selon une quelconque des revendications précédentes, dans lequel, lors de l'étape a), chaque donnée de contrôle (P1, P2) est générée en tenant compte du fait que l'opération de vérification de l'étape c) est activée au moment où l'instruction (B1, B2, Bn) liée à la donnée de contrôle (P1, P2) est l'instruction en cours d'exécution.

7. Procédé selon une quelconque des revendications précédentes, dans lequel chaque donnée de contrôle (P1, P2), liée à une variable (V1, V2, V3), comporte une valeur unique ou une plage de valeurs consécutives ou une liste de valeurs discrètes.

8. Procédé selon la revendication 7, dans lequel l'opération de vérification de l'étape c) consiste à comparer le contenu de la variable (V1, V2, V3), correspondant à la donnée de contrôle (P1, P2) trouvée lors de l'étape b), avec la/les valeurs définies dans ladite donnée de contrôle (P1, P2).

9. Procédé selon une quelconque des revendications précédentes, dans lequel chaque donnée de contrôle (P1, P2), liée à l'état d'une pile (S1), comporte au moins une valeur indiquant la taille de ladite pile (S1).

10. Procédé selon la revendication 9, dans lequel l'opération de vérification de l'étape c) consiste à comparer la taille de ladite pile (S1) avec la/les valeurs définies dans la donnée de contrôle (P1, P2) trouvée lors de l'étape b).

11. Procédé selon une quelconque des revendications précédentes, dans lequel, lors de l'étape a), est générée une pluralité de données de contrôle (P1, P2) liées à une unique instruction (B1, B2, Bn) .

12. Procédé selon l'une quelconque des revendications précédentes, un paramètre de niveau de vérification étant préalablement fourni à l'appareil (11), dans lequel un niveau de contrôle est associé à chaque donnée de contrôle (P1, P2), et dans lequel, lors de l'étape c), le résultat d'une comparaison entre le niveau de contrôle associé à une donnée de contrôle (P1, P2) et le paramètre de niveau de vérification détermine si l'opération de vérification doit être effectuée.

13. Procédé selon une quelconque des revendications précédentes, dans lequel l'étape a) est réalisée par des moyens distincts de l'appareil électronique portatif (11), les données de contrôle (P1, P2) générées étant ensuite chargées dans l'appareil électronique portatif (11).

14. Procédé selon une quelconque des revendications 1 à 12, dans lequel l'étape a) est réalisée par des moyens embarqués dans l'appareil électronique portatif (11).

15. Procédé selon une quelconque des revendications précédentes, comprenant une étape supplémentaire (E12) consistant à activer une action appropriée à une détection d'erreur d'exécution ou d'attaque, en cas d'échec de la vérification de l'étape c).

16. Procédé selon une quelconque des revendications précédentes, dans lequel au moins une donnée de contrôle (P1, P2) comprend :
- un chemin d'exécution menant à l'instruction (B1, B2, Bn) qui est liée à ladite donnée de contrôle (P1, P2), ou
- une valeur calculée en fonction d'un chemin d'exécution menant à l'instruction (B1, B2, Bn) qui est liée à ladite donnée de contrôle (P1, P2).

17. Procédé selon une quelconque des revendications précédentes, dans lequel une liste LC d'instructions critiques est générée (E2) et dans lequel l'opération de vérification de l'étape c) est considérée comme ayant échouée si aucune donnée de contrôle (P1, P2) n'a été trouvée pour l'instruction courante et si l'instruction courante appartient à ladite liste LC.

18. Appareil électronique portatif (11) comprenant un microprocesseur (12), une mémoire non volatile (14) et une application (20) comportant une suite d'instructions (B1, B2, Bn), au moins une variable (V1, V2, V3) et/ou au moins une pile (S1) utilisées lors de l'exécution de l'application (20), **caractérisé en ce qu'**il comprend :
- des moyens pour rechercher, lors de l'exécution de l'instruction (B1, B2, Bn), la donnée de contrôle (P1, P2) liée à ladite instruction (B1, B2, Bn),
- des moyens pour exécuter une opération de vérification du contenu de la variable (V1, V2, V3) ou de l'état de la pile (S1) fondée sur la donnée de contrôle (P1, P2) trouvée.

19. Appareil selon la revendication 18 dans lequel l'exécution de l'application (20) utilise au moins une variable (V1, V2, V3) qui est temporaire.

20. Appareil selon la revendication 18 ou 19 comprenant en outre des moyens pour générer au moins une donnée de contrôle (P1, P2) représentative de la variable (V1, V2, V3) et/ou de l'état d'une pile (S1), au moment de l'exécution d'une instruction (B1, B2, Bn).

21. Appareil selon la revendication 18, 19 ou 20, **caractérisé en ce que** cet appareil (11) est une carte à puce, une clé USB ou un téléphone mobile.
